# EUROPÄISCHE PATENTSCHRIFT

(11) **EP 3 138 716 B1**
(45) Veröffentlichungstag und Bekanntmachung des Hinweises auf die Patenterteilung: **27.10.2021**
(21) Anmeldenummer: 16183673.9
(22) Anmeldetag: 11.08.2016
(51) Int. Cl.: B60K 11/08

(54) **LUFTEINLASS FÜR EIN KRAFTFAHRZEUG**
AIR INLET FOR A MOTOR VEHICLE
ENTRÉE D'AIR POUR VÉHICULE AUTOMOBILE

(30) Priorität: 03.09.2015 DE 102015216924
(43) Veröffentlichungstag der Anmeldung: 08.03.2017
(73) Patentinhaber: Magna Exteriors GmbH, 63877 Sailauf (DE)
(72) Erfinder: KNAUER, Bernd, 70199 Stuttgart (DE)
(74) Vertreter: Rausch, Gabriele

(56) Entgegenhaltungen:
- WO-A1-2014/036432
- WO-A1-2015/032990
- DE-A1- 10 233 408
- US-A1- 2013 092 463

## Beschreibung

### Gebiet der Erfindung

Die vorliegende Erfindung betrifft einen Lufteinlass für ein Kraftfahrzeug insbesondere zur Steuerung einer Kühleinrichtung einer Verbrennungskraftmaschine zuzuführender Luft.

### Stand der Technik

Solche Lufteinlässe dienen zum Steuern des Warmlaufverhaltens des Motors, indem der Luftstrom, beispielsweise zum Wärmetauscher, mittels verstellbaren Schließelementen gesteuert wird. Durch Schließen der Frischluftzufuhr während des Warmlaufens bzw. durch Steuern der Kühlluftmenge entsprechend der Motortemperatur wird die optimale Betriebstemperatur schneller erreicht bzw. innerhalb eines gewünschten Temperaturbereichs gehalten werden.

Derartige Schließelemente werden frontseitig an einem Fahrzeug montiert, so dass dessen Motorraum dicht verschliessbar ist, in geschlossener Position der Schließelemente der cw-Wert verbessert wird und der Motor schneller seine Betriebstemperatur erreicht.

Ein Schließelement dieser Art ist bekannt durch die DE 10 2008 049 010. Ihr mittig angeordneter Aktuator dient der gegenläufigen Schwenkbewegung von übereinander angeordneten Gruppen von Lamellen. Um mehrere parallel zueinander angeordnete Lamellen gleichsinnig zu schwenken, hat jede von ihnen im Abstand von ihrer Schwenkachse einen Mitnehmerzapfen, der mit einem gemeinsamen Kopplungselement verbunden ist. Der Schwenkantrieb erfolgt dabei durch die direkte Kupplung der Drehachse einer der Lamellen mit der Abtriebswelle eines Schrittmotors.

Ein Vorteil dieser Bauweise besteht in der platzsparenden, mittigen Anordnung des Aktuators innerhalb des Rahmens sowie in der folglich symmetrischen Verteilung der Stellkraft des Aktuators auf relativ kurze und damit durch Biege- und Torsionskräfte höher belastbare Schließelemente. Solche Kräfte entstehen nicht nur durch den Staudruck an der Fahrzeugfront oder durch die Einwirkung von Schlagkräften durch aufprallende Fremdkörper, sondern auch durch die Stellkraft des Aktuators, wenn einige Lamellen durch Verschmutzung schwergängig sind oder nach Festfrieren losgebrochen werden müssen.

Aus der DE 10 2012 214 474 A1 ist ein steuerbarer Lufteinlass für ein Kraftfahrzeug bekannt, wobei wenigstens ein um eine Längsachse schwenkbares Schließelement an seinen freien Enden in je einer Lageraufnahme gelagert ist.

Die freien Enden des Schließelements sind im Wesentlichen als zylindrische Zapfen ausgebildet, wodurch das wenigstens ein schwenkbares Schließelement in Achsrichtung, innerhalb der Bauteiltoleranzen, verschiebbar ist. Bei hohen Geschwindigkeiten des Kraftfahrzeugs und entsprechend großen Windkräften, erfolgt ein Flattern, Klappern oder gar Abheben des schwenkbaren Elements, was zu einer unerwünschten Geräuschentwicklung führt.

Aus der US20130092463 A1 ist ein Lufteinlass bekannt, der Schließelemente aufweist, die mit dem zugehörigen Rahmen über Rastelement mit einer umlaufenden Nut zu verbinden sind. Allerdings sind die Rastelemente im Rahmen nur gelagert und nicht mit einem Gegenelement des Rahmens verrastet.

Man kann den Lufteinlass auch als Verbundstruktur bestehend aus Kunststoff und Metall herstellen, um ein Flattern, Klappern oder Abheben zu reduzieren, was jedoch zu einer unerwünschten Gewichtsmehrung des Lufteinlasses führt.

### Zusammenfassung der Erfindung

Es ist eine Aufgabe der Erfindung einen steuerbaren Lufteinlass für ein Kraftfahrzeug vorzusehen bei dem die genannten Nachteile mittels einfacher Maßnahmen und ohne zusätzliche Gewichtsmehrung zuverlässig beseitigt werden.

Die Lösung der Aufgabe erfolgt durch einen Lufteinlass für ein Kraftfahrzeug, insbesondere zur Steuerung der einer Kühleinrichtung einer Verbrennungskraftmaschine zuzuführenden Luft, umfassend einen Rahmen und zumindest ein Schließelement, wobei das Schließelement innerhalb des Rahmens um eine Drehachse des Schließelements schwenkbar angeordnet ist, wobei das Schließelement derart ausgebildet ist, dass es mit dem Rahmen über zumindest einen Rastmechanismus verbunden ist.

Erfindungsgemäß ist somit vorgesehen, dass mittels des Rastmechanismus das Lagerspiel in Achsrichtung, zwischen Schließelement und Rahmen minimiert wird.

Weiterbildungen der Erfindung sind in den abhängigen Ansprüchen, der Beschreibung sowie den beigefügten Zeichnungen angegeben.

Der Rastmechanismus weist im Wesentlichen einen Fortsatz und eine Aufnahme auf.

Der Fortsatz ist dabei in einer erfindungsgemäßen Ausführungsform an einem ersten Ende des Schließelements ausgebildet.

Der Fortsatz am Schließelement ist erfindungsgemäß im Wesentlichen zylindrisch entlang der Drehachse ausgebildet, wobei der Fortsatz in einem Endbereich eine umlaufende Nut aufweist.

In einer bevorzugten erfindungsgemäßen Ausführungsform weist der Fortsatz des Schließelements in seinem Endbereich eine Kegelspitze oder ähnliche Geometrie auf, welche ein Verrasten des Fortsatzes mit der Aufnahme erleichtern soll, wobei die Kegelspitze angrenzend an die umlaufende Nut ausgebildet ist.

Die Aufnahme ist erfindungsgemäß am Gehäuse ausgebildet.

Die Aufnahme umfasst im Wesentlichen eine Durchgangsbohrung zum Lagern des Fortsatzes des Schließelements auf, wobei im Bereich der Durchgangsbohrung eine Rastnase vorgesehen ist, wobei die Rastnase des Rahmens in die umlaufende Nut des Fortsatzes des Schließelements eingerastet ist.

Der so gebildete Rastmechanismus verhindert so zuverlässig ein Verschieben des Schließelements in Achsrichtung.

Der Rahmen kann mehrteilig ausgebildet sein, wobei der Rahmen in einer bevorzugten Ausführungsform ein Rahmenteil und zumindest ein mit dem Rahmenteil verbundenes Seitenteil aufweist.

Das Schließelement greift mit dem freien zweiten Ende in ein mit dem Rahmenteil verbundenes Seitenteil ein.

Erfindungsgemäß ist somit vorgesehen, dass der das schwenkbar zu lagernde Schließelement aufzunehmende Rahmen zumindest ein Seitenteil aufweist, welches mit dem Rahmenteil verbunden wird und das Schließ-element endgültig lagernd aufnimmt.

Das Schließelement weist ein zweites freies Ende auf, wobei das zweite freie Ende entlang der Drehachse als ein im Wesentlichen zylindrischer Zapfen ausgebildet ist.

In einer alternativen Ausbildungsform kann das zweite freie Ende des Schließelements wie der Fortsatz des ersten freien Endes ausgebildet sein. Das Seitenteil weist ebenfalls eine Aufnahme auf, wodurch das Schließelement im Seitenteil ebenfalls verrastet ist.

Das erste freie Ende und das zweite freie Ende des Schließelements bilden die Drehachse des Schließelements.

Das Seitenteil wird nach dem Einsetzen des Schließelements in das Rahmenteil auf diesen aufgesteckt und mit dem Rahmenteil verbunden. Das Schließelement wird bei abgenommen Seitenteil in das Rahmenteil eingesetzt, wobei die Montage vorteilhaft ohne Deformation des Rahmens und/oder des Schließelements erfolgt.

Durch Aufsetzen des Seitenteils auf das Rahmenteil wird das zuvor frei liegende zweite Ende des Schließelements in einer Aufnahme oder Lageröffnung des Seitenteils erfasst und so dauerhaft gelagert.

Das Seitenteil wird in einer bevorzugten Ausführungsform mittels Rastmittel mit dem Rahmenteil verbunden.

Erfindungsgemäß sind zwei Seitenteile zum Verbinden mit dem Rahmenteil vorgesehen, wobei die Seitenteile als Links- bzw. Rechtsteil im Wesentlichen spiegelbildlich ausgebildet sind.

In einer weiteren erfindungsgemäßen Ausführungsform ist eine Vielzahl von Schließelementen vorgesehen, wobei die Schließelemente jeweils um ihre jeweilige Drehachse in ihren jeweiligen Aufnahmen des Rahmens verschwenkbar sind.

In einer bevorzugten Ausführungsform ist der steuerbare Lufteinlass aus Kunststoff hergestellt, wobei die einzelnen Teile bevorzugt im Spritzgussverfahren gefertigt sind.

Die Schließelemente und die beiden Seitenteile sind als Links- und Rechtsteile, welche im Wesentlichen, um die Y-Ebene gespiegelt, spiegelbildlich ausgebildet sind.

Die Aktuierung der Schließelemente erfolgt elektrisch, wobei die Aktuierungseinrichtung in ein dafür ausgebildetes Gehäuse des Rahmenteils angeordnet ist.

Die Schließelemente weisen noch jeweils einen zusätzlichen Stift auf, der in einem definierten Abstand zu der Drehachse angeordnet ist und der Anlenkung eines Betätigungselementes dient.

### Kurzbeschreibung der Zeichnungen

Die Erfindung wird im Folgenden beispielhaft unter Bezugnahme auf die Zeichnungen beschrieben.
- Fig. 1: ist eine perspektivische Ansicht eines erfindungsgemäßen Lufteinlasses.
- Fig. 2: ist eine Explosionsdarstellung, welche den Lufteinlass gemäß Fig. 1 von vorne zeigt.
- Fig. 3: ist eine Schnittansicht des Rastmechanismus.

### Detaillierte Beschreibung der Erfindung

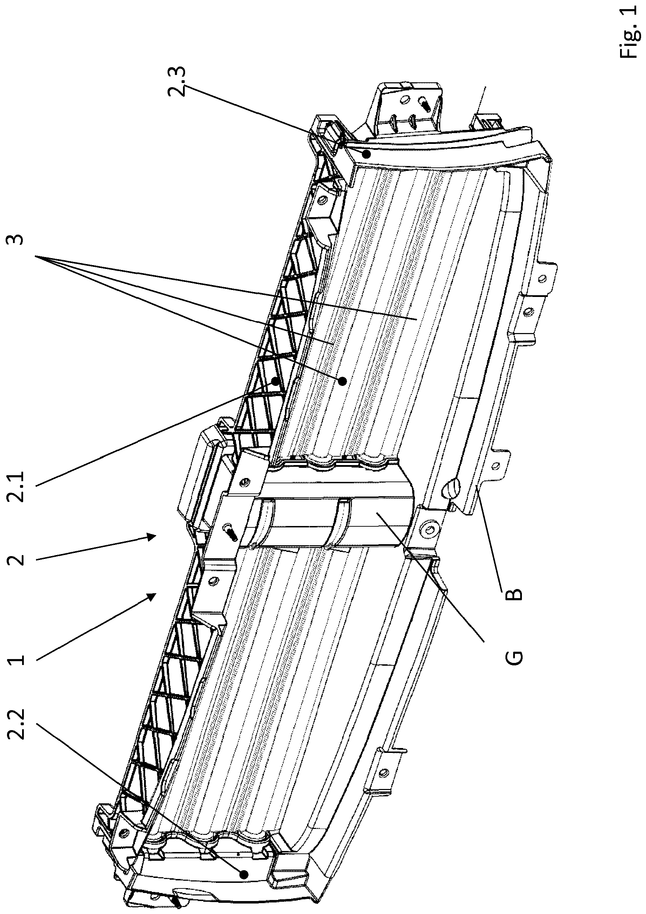

In Fig. 1 ist ein erfindungsgemäßer Lufteinlass 1 im Zusammenbau dargestellt. Der Lufteinlass 1 umfasst im Wesentlichen einen Rahmen 2, wobei der Rahmen 2 im Wesentlichen aus einem Rahmenteil 2.1 entlang der oberen Kante des Lufteinlasses und zwei Seitenteilen 2.2, 2.3 besteht. Diese Bauteile sind steckbar und durch Schrauben oder ähnliche Verbindungen, z.B. Rastverbindungen 11 miteinander verbunden und werden auf einem Basisbauteil B montiert. Zentral und mittig zum Bauteile 2.1 ist ein Gehäuse für einen Aktuator vorgesehen, das mit dem Rahmenteil 2.1 verbunden ist und den Rahmen mit dem Basisbauteil B verbindet. Im Rahmen 2 sind Schließelemente 3 angeordnet, welche zum Steuern der Luftmenge zu einer nicht dargestellten Kühleinrichtung einer Verbrennungskraftmaschine dienen. Die Schließelemente sind zu dabei sowohl in den Seitenteilen 2.2 und 2.3 gelagert als auch mittig im Gehäuse G des Aktuators. Der Lufteinlass 1 ist hinter einem nicht dargestellten Kühlergrill eines Kraftfahrzeugs angeordnet. Aus Kosten- und Gewichtsgründen wird der Lufteinlass bzw. dessen Bauteile aus Kunststoff, bevorzugt im Spritzgussverfahren, hergestellt.

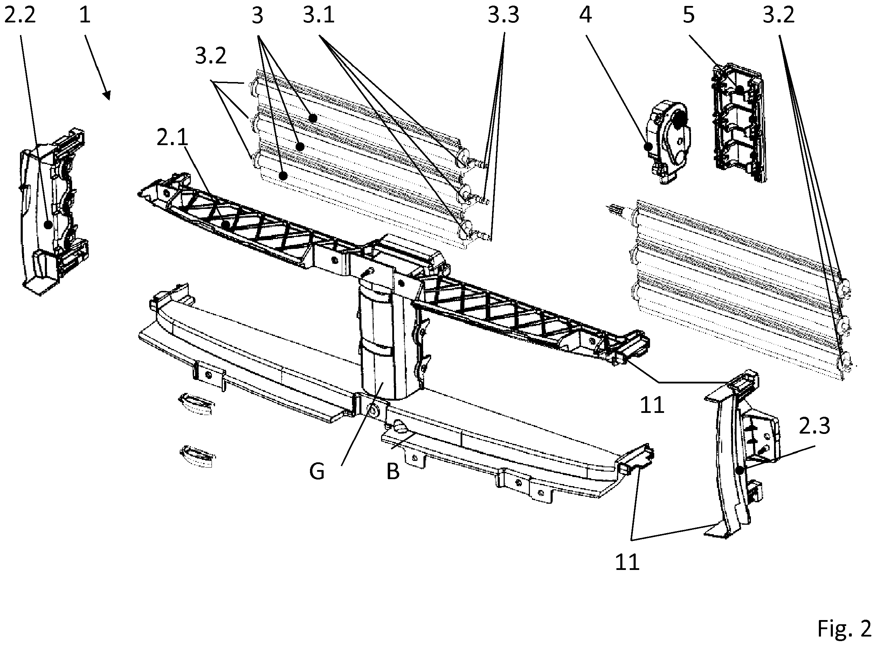

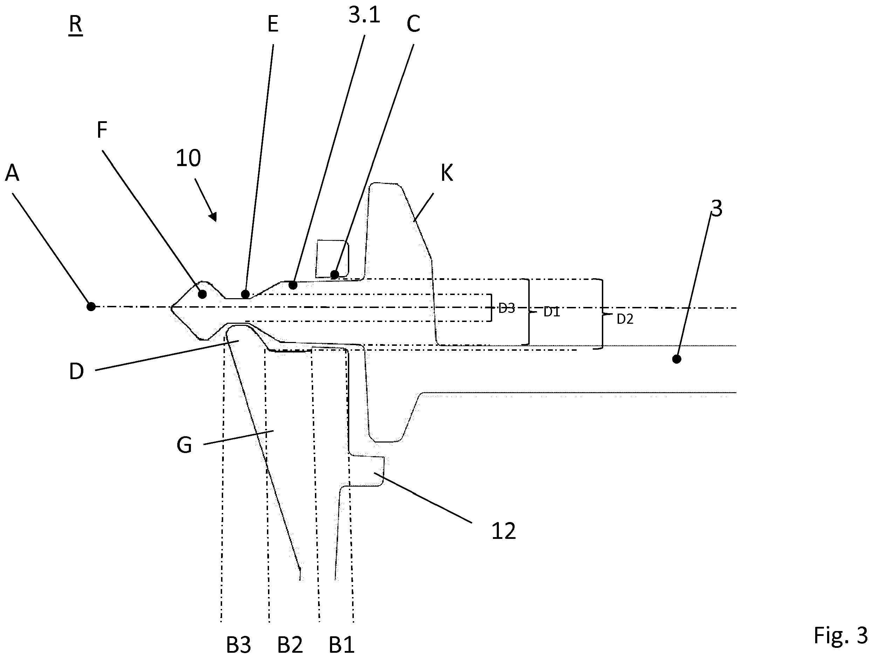

Fig. 2 zeigt den Lufteinlass 1 gemäß Fig. 1 in einer Explosionsdarstellung. Unterhalb des Rahmenteils 2.1 wird eine Vielzahl von Schließelementen 3 eingesetzt, welche jeweils um eine Drehachse A, die der Längsachse der Schließelemente entspricht, verschwenkbar sind. Die Verschwenkung der Schließelemente 3 erfolgt bevorzugt elektrisch mittels einer Aktuierungseinheit 4, welche in dem dafür ausgebildeten Gehäuse G des Rahmenteils 2.1 angeordnet ist und mit einem extra dafür ausgebildeten Schließelement 3 antriebsverbunden ist. Die Antriebseinheit 4 wird in das Gehäuse G eingebaut und betätigt eine Betätigungselement 5, das das Gehäuse G nach innen abschließt. Das Betätigungselement 5 weist Mitnahmeöffnungen auf, in die dafür vorgesehenen Stiften 3.3 an den Schließelementen 3 eingehängt sind. Das Betätigungselement 5, ist als eine Zug- und Schubkräfte übertragende Einheit ausgebildet und entsprechend außerhalb des Rahmenteils 2.1 und des Gehäuses in vertikaler Richtung verschiebbar gelagert. Die zusätzlichen Stifte 3.3 sind in die Mitnahmeöffnungen des Betätigungselements 5 eingehängt, sodass eine Verschiebung des Betätigungselementes 5 eine synchrone Verschwenkung der Schließelemente 3 bewirkt. Die Stifte 3.3 sind in einen definierten Abstand zu der jeweiligen Drehachse A der Schließelemente und zu den Fortsätzen 3.1 angeordnet. Bei Verschieben des Betätigungselements 5 werden die Schließelemente 3 verschwenkt. Die Schließelemente 3 weisen jeweils an ihrem ersten freien Ende, das zum Antrieb gerichtet ist, einen Fortsatz 3.1 auf, welcher mit dem zweiten freien Ende, welcher als Zapfen 3.2 ausgebildet sein kann, die Drehachse A bildet. Alternativ kann der Zapfen 3.2 ebenfalls als Fortsatz ausgebildet sein. Der Fortsatz 3.1 ist in einer Aufnahme des Gehäuses G gelagert und bildet mit dieser Aufnahme den Rastmechanismus R, welcher in Fig. 3 detailliert dargestellt ist und beschrieben wird. Die Schließelemente 3 werden mit dem Rahmen verbunden, wobei die Seitenteile 2.2, 2.3 mit den zweiten freien Enden 3.2 der Schließelemente 3 jeweils verbunden sind und danach mit das Rahmenteil 2.1 durch Verrasten der Seitenteile den Rahmen vervollständigt.

In Fig. 3 wird der Rastmechanismus R im Schnitt dargestellt. Dieser Rastmechanismus befindet sich zwischen dem ersten Endbereich der Schließelemente und dem Gehäuse G. Der Rastmechanismus R umfasst im Wesentlichen eine Aufnahme 10 und einen Fortsatz 3.1, wobei die Aufnahme 10 in einer erfindungsgemäßen Ausführungsform am Rahmenteil 2.1, präziser am Gehäuse G ausgebildet ist und wobei der Fortsatz 3.1 am Schließelement 3 angeformt ist. Die Aufnahme 10 weist eine Durchgangsbohrung C und eine im Bereich der Durchgangsbohrung C ausgebildete Rastnase D auf. Die Durchgangsbohrung hat einen Durchmesser, der einer ersten Durchmesser D1 des Fortsatzes 3.1 entspricht, die Durchgangsbohrung erstreckt sich mit demselben Durchmesser entlang der Achse A, sondern ist nach einer ersten Breite B1 auf einer größeren Durchmesser D2 erweitert. In diesem Bereich ist es nicht mehr notwendig, dass das Gehäuse eine erhöhte Gesamtwandstärke besitzt. Wie aus er Zeichnung zu entnehmen ist die Durchgangsbohrung auf er Oberseite des Fortsatzes auf die Breite B1 begrenzt und die Wandstärke ist ebenfalls nur B1. Im unteren Bereich bildet die Wand des Gehäuses aber eine Verstärkung aus, die zu einer Verdickung der Wandstärke bis auf eine Gesamtbreite aus B1+B2 +B3 führt. Im Bereich der dritten Breite B3 ist eine Rastnase D ausgebildet, die den fiktiven Durchmesser der Durchgangsbohrung deutlich reduziert. Diese Rastnase D weist die Form einer Erhöhung im Randbereich der Wandstärkenverbreiterung des Gehäuses auf. Sie erstreckt sich vertikal nach oben, wobei die zum Schließelement gerichtete Neigung einen stumpfen Winkel alpha bildet und der Verlauf der Rastnase leicht abgerundet ist. Nach einem flachen Verlauf, in dem sich die Rastnase entsprechend der Nut E erstreckt, verjüngt sich die äußere Flanke der Rastnase bis zu Wandstärke B1 des Gehäuses.

In der Durchgangsbohrung C ist der Fortsatz 3.1 im Bereich der Breite B1 und B3 lagernd aufgenommen. Der Fortsatz 3.1 läuft nach einer Länge L1 konisch zu einem reduzierten Durchmesser D2 zusammen, so dass er im Bereich seines Endes eine umlaufende Nut E ausbildet. Damit sich die Nut ausbildet steigt der Durchmesser des Fortsatzes 3.1. wieder an. Am Ende des Fortsatzes 3.1 angrenzend an die umlaufende Nut E ist ein Kegelspitze F ausgebildet. Diese Kegelspitze besteht aus einem ersten Bereich in dem der Durchmesser ansteigt und einem zweiten Bereich, in dem der Durchmesser bis Null reduziert wird. Dadurch entsteht eine spitz oder ballig zulaufendes Ende, das die Einführung des Schließelements in die Aufnahmen 10 erleichtert und gleichzeitig zur Verrastung dient.

In die umlaufende Nut E greift die Rastnase D ein wodurch das Schließelement 3 und das Gehäuse verrastet sind. Die Kegelspitze F erleichtert das Verrasten der Rastnase D in die umlaufende Nut E beim Verbinden des Schließelements 3 mit dem Gehäuse im Rahmen. Es kann statt eines Kegelspitzes F auch jede andere Geometrie, welche ein Verrasten erleichtert, verwendet werden.

Die Führung in der Aufnahme wird durch die Durchgangsbohrung erledigt, das Verrasten durch das Überfahren der Rastnase mit dem Kegelspitze F. Zur weiteren Führung dienen auch noch zwei weitere Bereiche der Rastverbindung. Das Schließelement 3 weist einen Kragen K auf der auch als Anschlag benutzbar ist und verhindert, dass beispielsweise bei der Montage das Rastelement mit zu großen Kräften beaufschlagt würde. Der Abstand des Kragens von der Wand des Gehäuses ist dabei so gewählt, dass im Fall eines Anliegens, der Fortsatz 3.1 nur im Bereich der Innenflanke der Rastnase eine Kraft ausübt, die Rastnase aber nicht abdrücken kann. Unterhalb der Durchgangsbohrung ist eine Rippe 12 vorgesehen, die Führungsfunktionen hat und hilft bei einer Beaufschlagung des Schließelements mit einer vertikalen Kraft nach unten den Fortsatz 3.1. abzuknicken.

Die Erfindung lässt sich für jede Rastverbindung eines Schließelements eines Lufteinlass am Kraftfahrzeug realisieren.

Die Schließelemente können beidseitig mit der erfindungsgemäßen Rastverbindung eingebaut sein, der nur an einem Ende der Schließelemente. Die Rastverbindung kann je nach baulicher Ausgestaltung der Rahmenstruktur im Zentralbereich am einem Gehäuse, das auch nur eine Mittenverbindung zwischen Rahmenteil 2.1 und dem Basisbauelement B sein kann, angebracht werden oder an den Seitenteilen des Rahmens. Es ist dabei auch denkbar, dass nicht alle Schließelemente, also in dem gezeigten Beispiel nicht alle drei Schließelemente jeweils mit demselben Ende verrastet sind. In einer Ausführungsform ist es möglich beispielsweise die beiden äußeren Schließelemente an ihrem zur Mitte gerichteten Enden nach der Erfindung zu verrasten und das mittlerer Schließelement dagegen an einem Seitenteil oder umgekehrt. Dadurch können die Aufnahmeöffnungen und Durchgangsbohrungen sowie die Verdickung der Wandstärke noch flexibler eingesetzt werden und gerade die Verdickung der Wandstärke zur Versteifung der Kunststoffbauteile benutzt werden.

### Bezugszeichenliste

- 1: Lufteinlass
- 2: Rahmen
- 2.1: Rahmenteil
- 10: Aufnahme
- 2.2, 2.3: Seitenteil
- 3: Schließelement
- 3.1: Fortsatz, erstes freies Ende
- 3.2: Zapfen, zweites freies Ende
- 3.3: Stift
- 4: Aktuierungseinheit
- 5: Betätigungselement
- 11: Rastmittel
- 12: Rippe
- A: Drehachse
- R: Rastmechanismus
- C: Durchgangsbohrung
- D: Rastnase
- E: umlaufende Nut
- F: Kegelspitze
- B: Basisbauelement
- B1, B2, B3: Breiten
- D1 D2 D3: Durchmesser
- G: Gehäuse
- K: Kragen

## Patentansprüche

1. Lufteinlass (1) für ein Kraftfahrzeug, insbesondere zur Steuerung der einer Kühleinrichtung einer Verbrennungskraftmaschine zuzuführenden Luft, umfassend einen Rahmen (2) und zumindest ein Schließelement (3), wobei das Schließelement (3) innerhalb des Rahmens (2) an einem Gehäuse (G) und an Seitenteilen (2.2 , 2.3) um eine Drehachse (A) des Schließelements (3) schwenkbar angeordnet ist, wobeidas Schließelement (3) derart ausgebildet ist, dass es mit dem Rahmen (2) über zumindest einen Rastmechanismus (R), der einen zylindrischen Fortsatz (3.1) mit einer in einem Endbereich umlaufenden Nut (E) mit einem reduzierten Durchmesser und eine Aufnahme (10) im Gehäuse (G) aufweist, verbunden ist, **dadurch gekennzeichnet, dass** die Aufnahme (10) eine Durchgangsbohrung (C) zum Lagern des Fortsatzes (3.1) des Schließelements (3) aufweist, und dass im Bereich der Durchgangsbohrung (C) eine Rastnase (D) vorgesehen ist, wobei die Rastnase (D) des Gehäuses (G) in die umlaufende Nut (E) des Fortsatzes (3.1) des Schließelements (3) eingerastbar ist.

2. Lufteinlass (1) nach Anspruch 1, **dadurch gekennzeichnet, dass** der Fortsatz (3.1) an einem ersten freien Ende des Schließelements (3) in Richtung auf das Gehäuse (G) ausgebildet ist.

3. Lufteinlass (1) nach zumindest einem der vorhergehenden Ansprüche, **dadurch gekennzeichnet, dass** der Rahmen (2) zumindest ein Rahmenteil (2.1) und zumindest ein mit dem Rahmenteil (2.1) verbundenes Seitenteil (2.2, 2.3) aufweist.

4. Lufteinlass (1) nach zumindest einem der vorhergehenden Ansprüche, **dadurch gekennzeichnet, dass** das Schließelement (3) ein zweites freies Ende (3.2) aufweist, wobei das zweite freie Ende (3.2) entlang der Drehachse (A) als ein im Wesentlichen zylindrischer Zapfen (3.2) ausgebildet ist.

5. Lufteinlass (1) nach zumindest einem der vorhergehenden Ansprüche, **dadurch gekennzeichnet, dass** das Schließelement (3) mit seinem zweiten freien Ende (3.2) in ein mit dem Rahmenteil (2.1) verbundenes Seitenteil (2.2, 2.3) eingreift.

6. Lufteinlass (1) nach zumindest einem der vorhergehenden Ansprüche, **dadurch gekennzeichnet, dass** das erste freie Ende (3.1) und das zweite freie Ende (3.2) des Schließelements (3) die Drehachse (A) bilden.

7. Lufteinlass (1) nach zumindest einem der vorhergehenden Ansprüche, **dadurch gekennzeichnet, dass** das Seitenteil (2.2, 2.3) mittels Rastmittel (11) mit dem Rahmenteil (2.1) verbunden ist.

8. Lufteinlass (1) nach zumindest einem der vorhergehenden Ansprüche, **dadurch gekennzeichnet, dass** eine Vielzahl von Schließelementen (3) vorgesehen ist, wobei die Schließelemente (3) jeweils um ihre jeweilige Drehachse (A) in ihren jeweiligen Aufnahmen (10) des Rahmens (2) verschwenkbar sind.

9. Lufteinlass (1) nach zumindest einem der vorhergehenden Ansprüche, **dadurch gekennzeichnet, dass** der Lufteinlass (1) aus Kunststoff hergestellt ist, wobei die einzelnen Teile (2.1, 2.2, 2.3, 3) bevorzugt im Spritzgussverfahren gefertigt sind.

10. Lufteinlass (1) nach zumindest einem der vorhergehenden Ansprüche, **dadurch gekennzeichnet, dass** die Aktuierung des Schließelements (3) elektrisch erfolgt, wobei die Aktuierungseinrichtung (4) in einem dafür ausgebildeten Gehäuse des Rahmenteils (2.1) angeordnet ist.

## Claims

1. Air inlet (1) for a motor vehicle, in particular for controlling the air to be supplied to a cooling device of an internal combustion engine, comprising a frame (2) and at least one closing element (3), wherein the closing element (3) is arranged within the frame (2) on a housing (G) and on side parts (2.2, 2.3) so as to be pivotable about an axis of rotation (A) of the closing element (3), wherein the closing element (3) is designed in such a way that it is connected to the frame (2) via at least one latching mechanism (R) which has a cylindrical extension (3.1) with a reduced-diameter peripheral groove (E) in an end region and a receptacle (10) in the housing (G), **characterized in that** the receptacle (10) has a through-bore (C) for mounting the extension (3.1) of the closing element (3), and **in that** a latching lug (D) is provided in the region of the through-bore (C), wherein the latching lug (D) of the housing (G) can be latched into the peripheral groove (E) of the extension (3.1) of the closing element (3).

2. Air inlet (1) according to Claim 1, **characterized in that** the extension (3.1) is formed on a first free end of the closing element (3) in the direction of the housing (G).

3. Air inlet (1) according to at least one of the preceding claims, **characterized in that** the frame (2) has at least one frame part (2.1) and at least one side part (2.2, 2.3) connected to the frame part (2.1).

4. Air inlet (1) according to at least one of the preceding claims, **characterized in that** the closing element (3) has a second free end (3.2), wherein the second free end (3.2) is formed along the axis of rotation (A) as a substantially cylindrical journal (3.2).

5. Air inlet (1) according to at least one of the preceding claims, **characterized in that** the closing element (3) engages by its second free end (3.2) in a side part (2.2, 2.3) connected to the frame part (2.1).

6. Air inlet (1) according to at least one of the preceding claims, **characterized in that** the first free end (3.1) and the second free end (3.2) of the closing element (3) form the axis of rotation (A).

7. Air inlet (1) according to at least one of the preceding claims, **characterized in that** the side part (2.2, 2.3) is connected to the frame part (2.1) by way of latching means (11).

8. Air inlet (1) according to at least one of the preceding claims, **characterized in that** a plurality of closing elements (3) are provided, wherein the closing elements (3) are each pivotable about their respective axis of rotation (A) in their respective receptacles (10) of the frame (2).

9. Air inlet (1) according to at least one of the preceding claims, **characterized in that** the air inlet (1) is made of plastic, wherein the individual parts (2.1, 2.2, 2.3, 3) are preferably manufactured by an injection-moulding process.

10. Air inlet (1) according to at least one of the preceding claims, **characterized in that** the closing element (3) is actuated electrically, wherein the actuating device (4) is arranged in a housing of the frame part (2.1) that is designed therefor.

## Revendications

1. Entrée d'air (1) pour un véhicule automobile, en particulier pour diriger l'air à amener à un dispositif de refroidissement d'une machine à combustion interne, comprenant un cadre (2) et au moins un élément de fermeture (3), l'élément de fermeture (3) étant disposé à l'intérieur du cadre (2) de manière à pouvoir pivoter autour d'un axe de rotation (A) de l'élément de fermeture (3) au niveau d'un boîtier (G) et de parties latérales (2.2, 2.3), l'élément de fermeture (3) étant réalisé de telle sorte qu'il est relié au cadre (2) par au moins un mécanisme d'encliquetage (R) qui présente une saillie cylindrique (3.1) dotée d'une rainure (E) périphérique dans une zone d'extrémité et ayant un diamètre réduit et un logement (10) dans le boîtier (G),
**caractérisée en ce que** le logement (10) présente un alésage traversant (C) pour loger la saillie (3.1) de l'élément de fermeture (3), et **en ce qu'**un ergot d'encliquetage (D) est prévu dans la zone de l'alésage traversant (C), l'ergot d'encliquetage (D) du boîtier (G) pouvant s'encliqueter dans la rainure périphérique (E) de la saillie (3.1) de l'élément de fermeture (3).

2. Entrée d'air (1) selon la revendication 1, **caractérisée en ce que** la saillie (3.1) est réalisée à une première extrémité libre de l'élément de fermeture (3) en direction du boîtier (G).

3. Entrée d'air (1) selon au moins l'une des revendications précédentes, **caractérisée en ce que** le cadre (2) présente au moins une partie de cadre (2.1) et au moins une partie latérale (2.2, 2.3) reliée à la partie de cadre (2.1).

4. Entrée d'air (1) selon au moins l'une des revendications précédentes, **caractérisée en ce que** l'élément de fermeture (3) présente une deuxième extrémité libre (3.2), la deuxième extrémité libre (3.2) étant réalisée le long de l'axe de rotation (A) comme un tenon (3.2) substantiellement cylindrique.

5. Entrée d'air (1) selon au moins l'une des revendications précédentes, **caractérisée en ce que** l'élément de fermeture (3), à sa deuxième extrémité libre (3.2), vient en prise avec une partie latérale (2.2, 2.3) reliée à la partie de cadre (2.1).

6. Entrée d'air (1) selon au moins l'une des revendications précédentes, **caractérisée en ce que** la première extrémité libre (3.1) et la deuxième extrémité libre (3.2) de l'élément de fermeture (3) constituent l'axe de rotation (A).

7. Entrée d'air (1) selon au moins l'une des revendications précédentes, **caractérisée en ce que** la partie latérale (2.2, 2.3) est reliée à la partie de cadre (2.1) à l'aide de moyens d'encliquetage (11).

8. Entrée d'air (1) selon au moins l'une des revendications précédentes, **caractérisée en ce qu'**une pluralité d'éléments de fermeture (3) est prévue, les éléments de fermeture (3) pouvant respectivement pivoter autour de leur axe de rotation respectif (A) dans leurs logements respectifs (10) du cadre (2).

9. Entrée d'air (1) selon au moins l'une des revendications précédentes, **caractérisée en ce que** l'entrée d'air (1) est fabriquée en matière plastique, les parties individuelles (2.1, 2.2, 2.3, 3) étant de préférence fabriquées selon un procédé de moulage par injection.

10. Entrée d'air (1) selon au moins l'une des revendications précédentes, **caractérisée en ce que** l'actionnement de l'élément de fermeture (3) est effectué électriquement, le dispositif d'actionnement (4) étant disposé dans un boîtier réalisé à cet effet dans la partie de cadre (2.1).
